(19) Europäisches Patentamt
European Patent Office
Office européen des brevets

(11) **EP 1 290 879 B1**

(12) **FASCICULE DE BREVET EUROPEEN**

(45) Date de publication et mention
de la délivrance du brevet:
**09.12.2009 Bulletin 2009/50**

(51) Int Cl.:
***H04N 7/01*** *(2006.01)*    ***H04N 5/14*** *(2006.01)*
***H04N 7/36*** *(2006.01)*    ***H04N 7/26*** *(2006.01)*

(21) Numéro de dépôt: **01931821.1**

(22) Date de dépôt: **09.05.2001**

(86) Numéro de dépôt international:
**PCT/FR2001/001394**

(87) Numéro de publication internationale:
**WO 2001/089211 (22.11.2001 Gazette 2001/47)**

(54) **PROCEDE DE DETECTION DE SATURATION D'UN CHAMP DE VECTEURS MOUVEMENT**

VERFAHREN ZUR DETEKTION VON SÄTTIGUNG EINES BEWEGUNGSVEKTORFELDES

METHOD FOR DETECTING SATURATION OF A MOTION VECTOR FIELD

(84) Etats contractants désignés:
**AT BE CH CY DE DK ES FI FR GB GR IE IT LI LU MC NL PT SE TR**

(30) Priorité: **19.05.2000 FR 0006422**

(43) Date de publication de la demande:
**12.03.2003 Bulletin 2003/11**

(73) Titulaire: **Thomson Licensing**
**92100 Boulogne-Billancourt (FR)**

(72) Inventeurs:
• **BRIAND, Gérard**
**Thomson Multimedia**
**92648 Boulogne Billancourt cedex (FR)**

• **VERDIER, Alain**
**Thomson Multimedia**
**92648 Boulogne Billancourt cedex (FR)**

• **MORONTA, Juan**
**Thomson Multimedia**
**42648 Boulogne Billancourt cedex (FR)**

(74) Mandataire: **Kohrs, Martin et al**
**Thomson multimedia**
**46, quai A. Le Gallo**
**92648 Boulogne-Billancourt Cedex (FR)**

(56) Documents cités:
EP-A- 0 645 933    GB-A- 2 277 002
GB-A- 2 311 184

**Description**

L'invention concerne un procédé et dispositif de détection de saturation d'un champ de vecteurs mouvement.

La conversion de fréquence trame, par exemple lors de conversion de norme fait généralement appel à deux procédés :

- l'estimation de mouvement qui fournit un champ de vecteurs fidèle à l'évolution spatio-temporelle des objets constituant la scène,
- l'interpolation qui peut faire usage de ce champ de vecteurs pour positionner correctement les objets dans une trame intermédiaire à construire.

Les interpolations compensées en mouvement, appliquées de manière classique en conversion de fréquence trame, ne conviennent pas toujours à toutes les situations rencontrées dans une séquence vidéo. Les estimateurs de mouvement et les interpolateurs associés ne supportent pas des amplitudes illimitées de vecteurs mouvement. Les contraintes de réalisation matérielle ou même logicielles nécessitent de fixer des valeurs maximales de fonctionnement. Au delà de ces valeurs, les processus engendrent des dysfonctionnements.

Le problème est donc d'évaluer le taux de confiance que l'on peut accorder à un champ de vecteurs mouvement pour obtenir des images interpolées de bonne qualité. La seule prise en compte, pour une telle évaluation, du nombre de vecteurs mouvement du champ de vecteurs, dont le niveau correspond au seuil de saturation, n'est pas suffisante. Elle ne permet pas d'obtenir des images interpolées de bonne qualité dans de nombreuses configurations, par exemple lors de forts mouvements d'objets de petite dimension dans l'image.

Une technique d'évaluation du taux de confiance associé à un vecteur mouvement est par exemple proposée dans le document GB 2 311 184-A.

L'invention a pour but de pallier les inconvénients précités.

Elle a pour objet un procédé de détection de saturation d'un champ de vecteurs mouvement relatif à une image à l'instant t, **caractérisé en ce qu'**il comporte les étapes de:

- comptage du nombre de vecteurs mouvement dont au moins une composante est supérieure à une valeur prédéterminée inférieure à la valeur maximale,
- comparaison de ce nombre à au moins un seuil prédéterminé,

et en ce que le champ de vecteurs mouvement est déclaré saturant si ce nombre est supérieur au seuil prédéterminé.

Selon une caractéristique particulière, il comporte une étape supplémentaire de découpe de l'image en sous-images m, le comptage étant effectué pour chaque sous-image m pour fournir un nombre Nb_sat(m,t), la comparaison étant effectuée pour chacune des sous-images et le champ étant déclaré saturant si ce nombre est supérieur au seuil prédéterminé pour au moins une des sous-images.

Selon une caractéristique particulière, le champ est déclaré saturant si au moins une des sous-images possède un nombre de vecteurs supérieur à un premier seuil et le champ est déclaré non saturant si l'ensemble des sous-images possède un nombre de vecteurs Nb_sat(m,t) inférieur à un deuxième seuil prédéterminé.

L'invention concerne également un procédé d'interpolation d'une séquence d'images mettant en oeuvre un premier type d'interpolation à partir de vecteurs mouvements et un deuxième type d'interpolation ne prenant pas en compte les vecteurs mouvement, **caractérisé en ce que**, si le champ de vecteurs mouvement de l'image courante est déclaré non saturant, le premier type d'interpolation est mis en oeuvre, en ce que, si le champ de vecteurs mouvement de l'image courante est déclaré saturant, le deuxième type d'interpolation est mis en oeuvre, en ce que, si le champ de vecteurs mouvement n'est pas déclaré saturant ou non saturant, le même type d'interpolation que pour l'image précédente est mis en oeuvre.

L'invention concerne également un dispositif d'interpolation d'image comportant un circuit d'estimation de mouvement fournissant un champ de vecteurs mouvement, un premier circuit d'interpolation temporelle en fonction du champ de vecteurs mouvement et un deuxième circuit d'interpolation temporelle non compensée en mouvement, **caractérisé en ce qu'**il comporte également un circuit de détection de saturation de champ de mouvement recevant le champ de vecteurs mouvement et mettant en oeuvre le procédé de détection de saturation et commutant sur la sortie du dispositif la sortie du premier interpolateur ou du deuxième interpolateur selon que le circuit détecte respectivement un champ non saturant ou saturant.

Le procédé élabore un paramètre de confiance qui peut être associé à un champ de vecteurs mouvement préalablement estimé. Ce paramètre est global à la trame et permet un mode d'utilisation particulier du champ de mouvement. Par exemple en conversion de fréquence, lorsque cette confiance est nulle pour le champ de vecteurs mouvement, l'interpolation compensée en mouvement est évitée. La valeur de ce paramètre peut ainsi commander une configuration d'interpolation plus adaptée.

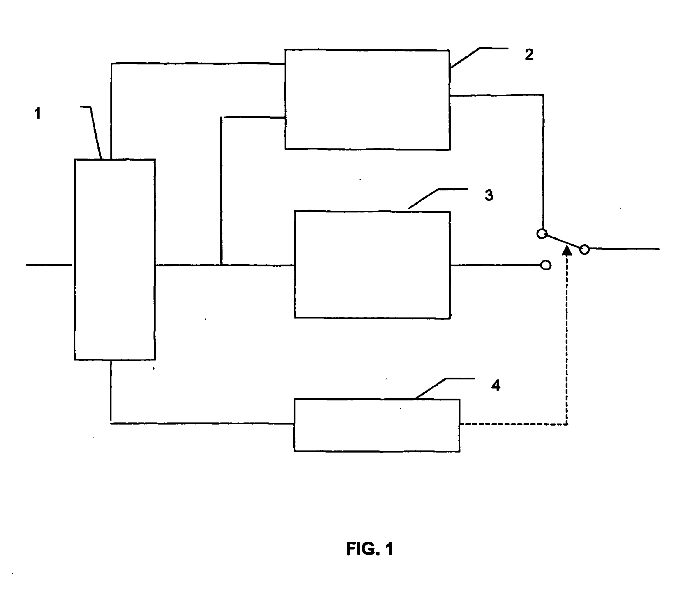

Les caractéristiques et avantages de la présente invention ressortiront mieux de la description suivante qui est donnée à titre d'exemple et en référence à la figure 1 qui représente un dispositif d'interpolation mettant en oeuvre le procédé selon l'invention.

D'une manière connue, un champ de vecteurs mouvement est préalablement estimé pour chacune des images d'une séquence d'image. Ce champ comporte à l'origine deux composantes suivant l'axe horizontal et l'axe vertical. C'est la composante horizontale qui est ici choisie car la plus représentative du mouvement sur un écran. L'oeil est plus sensible au déplacement horizontal et la dimension horizontale de l'écran est généralement la plus grande, en particulier s'il s'agit d'un affichage 16/9. Il est cependant tout à fait envisageable de raisonner sur deux types de détecteurs, l'un associé à la composante horizontale, l'autre à la composante verticale et de combiner leurs résultats, par exemple en s'interdisant d'appliquer une interpolation compensée en mouvement si au moins un des deux détecteurs de saturation est déclenché.

Les champs de vecteurs mouvement sont estimés à partir d'algorithmes d'estimation de mouvement et la plage d'estimation de mouvement est généralement fonction des puissances de calcul mises en jeu, temps de calcul tolérés, précisions souhaitées, etc. En d'autres termes, des amplitudes maximales de vecteurs mouvement, généralement bien inférieures aux dimensions de l'image, sont imposées. Il s'agit des seuils de saturation, un pour chaque composante, valeurs maximales que peuvent prendre les composantes des vecteurs mouvement. L'estimation de mouvement et l'application située en aval de celui-ci sont donc supposées supporter fonctionnellement ces valeurs maximales de vecteur mouvement manipulées.

Le procédé selon l'invention est basé sur le comptage de vecteurs dépassant un seuil de détection inférieur au seuil de saturation qui correspond à cette amplitude maximale fonctionnelle. Si le nombre de vecteurs comptabilisés dépasse un certain seuil, le champ de vecteurs est déclaré saturant.

Le fait de choisir une marge par rapport aux niveaux maxima autorisés pour les vecteurs mouvement, pour déclarer que le champ de vecteurs mouvement est saturant, permet d'améliorer la fiabilité du détecteur et donc le niveau de confiance de la détection. Ceci est particulièrement vrai pour les estimateurs de mouvement exploitant des algorithmes dont l'initialisation est effectuée à partir de valeurs issues de l'environnement spatial ou temporel du pixel, par exemple des estimateurs de mouvement de type récursif.

Il peut s'agir d'estimateurs de mouvement par appariement de blocs d'images, plus connus sous l'appellation anglaise de "block matching" dont la fenêtre de recherche peut être définie par récursivité, il peut également s'agir d'estimateurs de mouvement de type PEL récursif.

Si un tel environnement correspond à un vecteur saturant donc faux, la probabilité est grande pour que l'algorithme fournisse, en effectuant ses itérations à partir d'une valeur fausse, un vecteur voisin du vecteur saturant. Ce vecteur est également faux bien que non saturant.

Il s'agit en fait de s'affranchir d'oscillations autour des valeurs maximales autorisées par le système, oscillations due au fait que l'algorithme fixe généralement des limites de calcul autour de ces valeurs initiales.

Dans un exemple de réalisation, le système supporte fonctionnellement des amplitudes de la composante horizontale de vecteurs allant de -32 à +31. La partie entière de la composante horizontale, à laquelle on s'intéresse, est donc codée sur 5 bits.

Le seuil de détection de saturation est situé par exemple à -28 et +28, c'est à dire franchement en dessous de ces maxima. Les valeurs proches de -32 et +31sont considérées comme des valeurs peu fiables car proches de la saturation et le système de détection est basé sur la comptabilisation du nombre de vecteurs se trouvant dans ces zones de valeurs, c'est à dire de -28 à -32 et de +28 à +31.

Selon une autre caractéristique de l'invention, le champ de vecteurs mouvement de l'image est partitionné en sous-images de vecteurs de taille égale. L'image est partitionnée en sous-images et ce sont les champs de vecteurs relatifs à chaque sous-image qui sont considérés, champs appelés sous-images de vecteurs.

Dans un exemple de réalisation, 8 sous-images ont été adoptées, division par deux dans l'axe vertical et division par quatre dans l'axe horizontal.

Pour chaque sous-image de vecteurs, un histogramme est constitué : HISTO[m, n, t] où m est la sous-image, n l'amplitude du vecteur mouvement pour la composante horizontale et t l'instant trame courant. HISTO[m, n, t] représente donc le nombre d'échantillons ou pixels, dans la sous-image m de la trame ou image T(t), dont la composante horizontale a pour valeur n.

On appellera M le nombre de sous-images et N l'amplitude maximale fonctionnelle supportée par le système.

Pour constituer ces histogrammes, chaque sous-image m est parcourue individuellement. La précision adoptée pour les vecteurs, déterminant le nombre d'éléments des histogrammes, est directement liée à la finesse de la détection. Dans l'expérimentation, une précision d'une distance pixel a été conservée, correspondant à une distance de Wx/720 pour une largeur d'écran Wx, une ligne étant constituée de 720 pixels.

Pour chaque histogramme de sous-image, les vecteurs dont l'amplitude dépasse un certain seuil dit de détection, qui est différent du seuil de saturation, sont comptabilisés. Ce seuil de détection appelé S_Sat est le même pour tous les histogrammes.

Les dépassements d'amplitude sont comptabilisés pour chaque sous-image m de la façon suivante :

$$Nb\_Sat(m,t) = \sum_{n=-N}^{n=-S\_Sat} Histo(m,n,t) + \sum_{n=+S\_Sat}^{n=+(N-1)} Histo(m,n,t)$$

A partir des M comptabilisations de dépassement Nb_Sat (m, t), un test est réalisé pour élaborer une variable de saturation globale Sat_Glob(t), variable qui permet de définir le champ de vecteurs mouvement attaché à la trame ou image T(t) comme champ saturant ou non saturant.

Cette variable Sat_Glob(t) est en fait un paramètre de confiance qui va informer de la pertinence du champ de mouvement en terme de dépassement d'amplitude autorisée. Si le champ de vecteurs contient une trop grande concentration de vecteurs d'amplitude supérieure à un certain seuil, alors le système commute en mode saturé engendrant un comportement spécifique de l'application située en aval.

C'est en effet le champ de vecteurs de l'image complète qui est ou non déclaré saturé, car choisir un type de traitement par sous-image créerait des défauts perceptibles à l'oeil. Le choix d'une interpolation spécifique à une zone d'image correspondant à une sous-image serait trop visible à l'oeil.

Cette variable Sat_Glob(t) est élaborée à partir de deux seuils qui permettent de mettre en place une hystérésis temporelle. Le seuil le plus haut Sat_Compt_H est utilisé pour le passage en mode saturé (Sat_Glob (t)= 1) alors que le seuil bas Sat_Compt_B sert à la descente en mode non saturé (Sat_Glob (t)= 0).

Les conditions de commutation sont les suivantes :

- Si $Nb\_Sat(m,t) \geq Sat\_Compt\_H$ pour au moins une sous-image m,

alors Sat_Glob (t) =1

Le champ de vecteurs mouvement est déclaré saturé.

- Si $Nb\_Sat(m,t) \leq Sat\_Compt\_B$ quel que soit m, c'est à dire pour l'ensemble des sous-images,

alors Sat_Glob (t) =0

Le champ de vecteurs mouvement est déclaré non saturé.

- Si aucune de ces deux conditions n'est satisfaite

alors Sat_Glob (t) = Sat_Glob (t-1)

Le champ de vecteurs mouvement conserve sa précédente qualification, celle affectée au champ de vecteurs mouvement de la trame ou image précédente T(t-1).

Pour l'application de conversion de fréquence trame qui est à l'origine de ce procédé et pour laquelle N, amplitude maximale fonctionnelle, est égale à 32, les valeurs de seuil suivantes ont été adoptées :

S_Sat = 28
Sat_Compt_H = 1/3 du nombre de pixels dans la sous-image
Sat_Compt_B = 1/5 du nombre de pixels dans la sous-image

Par précaution la variable Sat_Glob(t) est initialisée à 0 au démarrage du système.

Les critères de détection et les seuils donnés en exemple ont été optimisés pour l'application de conversion de fréquence trame. Pour d'autres applications et en fonction du rôle que devra jouer,ce paramètre, des nouveaux seuils pourront être adoptés.

Le fait de considérer séparément chaque sous-image de vecteurs au lieu du champ de vecteurs global de l'image complète permet d'améliorer la sensibilité à des phénomènes locaux. L'oeil est en effet sensible à des défauts même ponctuels, par exemple sur un objet correspondant à une faible zone de l'image, se déplaçant très rapidement dans l'image. Une analyse globale de l'image ne permettrait pas de détecter facilement ces dépassements d'amplitude locaux. Ainsi, la découpe en sous-images permet de tenir compte de phénomènes de dépassement isolés. Cependant ces sous-images doivent rester de dimension suffisamment importante pour que le dénombrage réalisé reste robuste.

La détection de saturation dans un champ de vecteurs permet de préserver les systèmes contre les dysfonctionnements dus à des dépassements d'amplitude tolérée par ceux-ci. La variable élaborée est un paramètre de plus associé au champ de vecteurs et pouvant être exploité par l'application de compensation de mouvement située en aval.

L'hystérésis installée constitue d'elle-même un filtre temporel de l'information de saturation, les commutations temporelles sont durables. Les commutations trop fréquentes sont évitées permettant de limiter les défauts de continuité dans la séquence d'images.

Dans une application de conversion de rythme trame, les commutations intempestives ou de courte durée ne sont en effet pas souhaitables car finalement très visibles par rapport à des commutations durables.

Ce procédé bien que mis au point dans un contexte d'interpolation de rythme trame peut aussi être associé à d'autres critères de confiance pour d'autres types de traitement. Les seuils de détection sont adaptables à chaque système en fonction de ses capacités et en fonction du traitement à protéger.

Sans sortir du domaine de l'invention, il est également possible d'exploiter des sous-images de taille différente, chaque seuil pour sous-image étant alors corrigé d'un coefficient fonction du rapport entre le nombre de pixels dans une sous-image et le nombre de pixels dans l'image globale.

Il est également possible de moduler la sensibilité de la détection en fonction de la position géographique des sous-images en choisissant un seuil de détection différent pour certaines sous-images ou bien en choisissant des seuils relatifs au nombre de vecteurs comptabilisés Nb_Sat(m, t) qui soient différents pour certaines sous-images. Il est ainsi possible d'améliorer la détection par exemple pour les sous-images au centre de l'écran, pour lesquelles le spectateur est plus sensible aux défauts. En fait, une valeur de seuil peut être affectée à chaque sous-image selon la sensibilité que l'on veut lui attribuer.

L'invention concerne également un dispositif d'interpolation mettant en oeuvre le procédé précédemment décrit.

La figure 1 représente un tel dispositif. Les images en entrée du dispositif sont transmises à un estimateur de mouvement 1 qui fournit un champ de vecteurs mouvement. Les images en sortie de l'estimateur de mouvement sont transmises en parallèle à un premier circuit 2 d'interpolation à partir d'informations de mouvement, par exemple un premier circuit d'interpolation compensée en mouvement et à un deuxième circuit d'interpolation 3 ne prenant pas en compte les informations de vecteurs mouvement, par exemple un circuit d'interpolation temporelle non compensée en mouvement. Les champs de vecteurs mouvement en sortie de l'estimateur de mouvement sont transmis en parallèle au circuit d'interpolation 2 afin qu'il puisse réaliser les interpolations compensées en mouvement et à un circuit de détection de saturation de champ de vecteur 4 qui exploite le procédé précédemment décrit. Les informations de saturation provenant de ce circuit de détection de saturation commandent la sortie du dispositif :

- si ces informations indiquent que le champ de vecteurs mouvement est un champ saturant, le circuit force la sortie du dispositif sur la sortie du deuxième circuit d'interpolation 3.
- si les informations indiquent que le champ de vecteurs mouvement est un champ non saturant, le circuit force la sortie du dispositif sur la sortie du premier circuit d'interpolation 2.
- si les informations provenant de ce circuit de détection ne donnent aucune indication sur la qualité du champ de vecteurs mouvement, c'est à dire si la variable Sat_Glob(t) se trouve dans la plage d'hystérésis, la sortie du dispositif reste branchée sur le même circuit d'interpolation que pour l'image précédente.

Ainsi, selon l'information de saturation du champ de vecteur mouvement, l'interpolation est une interpolation compensée en mouvement ou une interpolation temporelle non compensée en mouvement.

## Revendications

1. Procédé de détection de saturation d'un champ de vecteurs mouvement relatif à une image à l'instant t, **caractérisé en ce qu'**il comporte les étapes de:

    - comptage d'un nombre de vecteurs mouvement dont au moins une composante est supérieure à une valeur prédéterminée inférieure à la valeur maximale que peut prendre cette composante,
    - comparaison de ce nombre à au moins un seuil prédéterminé,

    et **en ce que** le champ de vecteurs mouvement est déclaré saturant si ce nombre est supérieur au seuil prédéterminé.

2. Procédé selon la revendication 1, **caractérisé en ce qu'**il comporte une étape supplémentaire de découpe de l'image en sous-images m, **en ce que** le comptage est effectué pour chaque sous-image m pour fournir un nombre Nb_sat(m,t), **en ce que** la comparaison est effectuée pour chacune des sous-images et **en ce que** le champ est déclaré saturant si ce nombre est supérieur au seuil prédéterminé pour au moins une des sous-images.

3. Procédé selon la revendication 2, **caractérisé en ce que** la valeur prédéterminée est plus faible pour les sous-images dont une meilleure sensibilité de détection est souhaitée.

**4.** Procédé selon la revendication 2, **caractérisé en ce que** le seuil prédéterminé est plus faible pour les sous-images dont une meilleure sensibilité de détection est souhaitée.

**5.** Procédé selon la revendication 2, **caractérisé en ce que** le champ est déclaré saturant si au moins une des sous-images possède un nombre de vecteurs supérieur à un premier seuil et **en ce que** le champ est déclaré non saturant si l'ensemble des sous-images possède un nombre de vecteurs Nb_sat(m,t) inférieur à un deuxième seuil prédéterminé.

**6.** Procédé selon la revendication 5, **caractérisé en ce que** le premier seuil est supérieur au deuxième seuil d'une valeur déterminée pour créer une hystérésis.

**7.** Procédé d'interpolation d'une séquence d'images mettant en oeuvre un premier type d'interpolation à partir de vecteurs mouvements (2) et un deuxième type d'interpolation ne prenant pas en compte les vecteurs mouvement (3), **caractérisé en ce que,** si le champ de vecteurs mouvement de l'image courante est déclaré non saturant (4) selon le procédé de la revendication 6, le premier type d'interpolation est mis en oeuvre, **en ce que**, si le champ de vecteurs mouvement de l'image courante est déclaré saturant (4) selon le procédé de la revendication 6, le deuxième type d'interpolation est mis en oeuvre, **en ce que**, si le champ de vecteurs mouvement n'est pas déclaré saturant ou non saturant, le même type d'interpolation que pour l'image précédente est mis en oeuvre.

**8.** Dispositif d'interpolation d'image comportant un circuit d'estimation de mouvement (1) fournissant un champ de vecteurs mouvement, un premier circuit d'interpolation temporelle (2) en fonction du champ de vecteurs mouvement et un deuxième circuit d'interpolation temporelle non compensée en mouvement (3), **caractérisé en ce qu'**il comporte également un circuit de détection de saturation de champ de vecteurs mouvement (4) recevant le champ de vecteurs mouvement et mettant en oeuvre le procédé de la revendication 3 et commutant sur la sortie du dispositif la sortie du premier interpolateur (2) ou du deuxième interpolateur (3) selon que le circuit détecte respectivement un champ non saturant ou saturant.

**Claims**

**1.** Process for detecting saturation of a motion vector field relating to an image at the instant t, **characterized in that** it comprises the steps of:

- counting a number of motion vectors, at least one component of which is greater than a predetermined value less than the maximum value this component can take,
- comparing this number with at least one predetermined threshold,

and **in that** the motion vector field is declared saturating if this number is greater than the predetermined threshold.

**2.** Process according to Claim 1, **characterized in that** it comprises an additional step of chopping the image into subimages m, **in that** the counting is performed for each subimage m so as to yield a number Nb_sat(m,t), **in that** the comparison is performed for each of the subimages and **in that** the field is declared saturating if this number is greater than the predetermined threshold for at least one of the subimages.

**3.** Process according to Claim 2, **characterized in that** the predetermined value is smaller for the subimages for which better sensitivity of detection is desired.

**4.** Process according to Claim 2, **characterized in that** the predetermined threshold is smaller for the subimages for which better sensitivity of detection is desired.

**5.** Process according to Claim 2, **characterized in that** the field is declared saturating if at least one of the subimages possesses a number of vectors which is greater than a first threshold and **in that** the field is declared nonsaturating if the set of subimages possesses a number of vectors Nb_sat(m,t) which is less than a second predetermined threshold.

**6.** Process according to Claim 5, **characterized in that** the first threshold is greater than the second threshold by a value determined so as to create a hysteresis.

7. Process for interpolating an image sequence implementing a first type of interpolation on the basis of motion vectors (2) and a second type of interpolation disregarding the motion vectors (3), **characterized in that**, if the motion vector field of the current image is declared nonsaturating (4) according to the process of Claim 6, the first type of interpolation is implemented, **in that**, if the motion vector field of the current image is declared saturating (4) according to the process of Claim 6, the second type of interpolation is implemented, **in that**, if the motion vector field is not declared saturating or nonsaturating, the same type of interpolation as for the previous image is implemented.

8. Device for image interpolation comprising a motion estimation circuit (1) providing a motion vector field, a first circuit for temporal interpolation (2) as a function of the motion vector field and a second circuit for non-motion-compensated temporal interpolation (3), **characterized in that** it also comprises a motion field saturation detection circuit (4) receiving the motion vector field and implementing the process of Claim 3 and switching the output of the first interpolator (2) or of the second interpolator (3) over to the output of the device according to whether the circuit detects a nonsaturating or saturating field respectively.

**Patentansprüche**

1. Verfahren zur Detektion der Sättigung eines Bewegungsvektorfeldes zu einem Bild zu einem Zeitpunkt t, **dadurch gekennzeichnet, dass** es die folgenden Schritte umfasst:

   - Zählung einer Anzahl von Bewegungsvektoren, bei denen mindestens eine Komponente einen vorbestimmten Wert übersteigt, der geringer ist als der Maximalwert, den diese komponente annehmen kann,
   - Vergleich dieser Anzahl mit mindestens einem vorbestimmten Schwellenwert,

   und dass das Bewegungsvektorfeld als sättigend erklärt wird, wenn diese Anzahl den vorgegebenen Schwellenwert übersteigt.

2. Verfahren nach Anspruch 1, **dadurch gekennzeichnet, dass** es einen zusätzlichen Schritt des Schneidens des Bildes in Subbilder m umfasst, dass die Zählung für jedes Subbild m erfolgt, um eine Anzahl Nb_sat(m,t) zu liefern, dass der Vergleich für jedes der Subbilder erfolgt und dass das Feld als sättigend erklärt wird, wenn diese Anzahl bei mindestens einem der Subbilder den vorgegebenen Schwellenwert übersteigt.

3. Verfahren nach Anspruch 2, **dadurch gekennzeichnet, dass** der vorbestimmte Wert geringer ist für die Subbilder, bei denen eine bessere Detektionsempfindlichkeit erwünscht ist.

4. Verfahren nach Anspruch 2, **dadurch gekennzeichnet, dass** der vorbestimmte Schwellenwert geringer ist für die Subbilder, bei denen eine bessere Detektionsempfindlichkeit erwünscht ist.

5. Verfahren nach Anspruch 2, **dadurch gekennzeichnet, dass** das Feld als sättigend erklärt wird, wenn mindestens eines der Subbilder eine Anzahl von Vektoren aufweist, die einen ersten Schwellenwert übersteigt, und dass das Feld als nicht sättigend erklärt wird, wenn die Gesamtheit der Subbilder eine Anzahl von Vektoren Nb_sat(m,t) aufweist, die geringer ist als ein zweiter vorbestimmter Schwellenwert.

6. Verfahren nach Anspruch 5, **dadurch gekennzeichnet, dass** der erste Schwellenwert den zweiten Schwellenwert um einen bestimmten Wert übersteigt, um eine Hysterese zu erzeugen.

7. Verfahren zum Interpolieren einer Bildersequenz, bei dem ein erster Interpolationstyp ausgehend von Bewegungsvektoren (2) und ein zweiter Interpolationstyp, bei dem die Bewegungsvektoren nicht berücksichtigt werden (3), eingesetzt werden, **dadurch gekennzeichnet, dass**, wenn das Bewegungsvektorfeld des aktuellen Bildes gemäß dem Verfahren nach Anspruch 6 als nicht sättigend erklärt wird (4), der erste Interpolationstyp eingesetzt wird, dass, wenn das Bewegungsvektorfeld des aktuellen Bildes gemäß dem Verfahren nach Anspruch 6 als sättigend erklärt wird (4), der zweite Interpolationstyp eingesetzt wird, und dass, wenn das Bewegungsvektorfeld nicht als sättigend oder nicht sättigend erklärt wird, derselbe Interpolationstyp wie für das vorhergehende Bild eingesetzt wird.

8. Vorrichtung zur Bildinterpolation mit einer Schaltung zur Bewegungsschätzung (1), die ein Bewegungsvektorfeld liefert, einer ersten Schaltung für die zeitliche Interpolation (2) in Abhängigkeit von dem Bewegungsvektorfeld und einer zweiten Schaltung für die nicht bewegungskompensierte zeitliche Interpolation (3), **dadurch gekennzeichnet, dass** sie ebenfalls eine Schaltung zur Detektion der Sättigung des Bewegungsvektorfeldes (4) umfasst, welche das Bewegungsvektorfeld empfängt und das Verfahren nach Anspruch 3 einsetzt und den Ausgang des ersten Interpolators (2) oder des zweiten Interpolators (3) auf den Ausgang der Vorrichtung schaltet, je nachdem, ob die Schaltung ein nicht sättigendes beziehungsweise ein sättigendes Feld detektiert.

**FIG. 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2311184 A